# EUROPEAN PATENT APPLICATION

(11) **EP 2 557 402 A2**
(43) Date of publication of application: **13.02.2013**
(21) Application number: 12173789.4
(22) Date of filing: 27.06.2012
(51) Int. Cl.: G01F 23/00, G01F 23/14, G01F 23/30, G01F 23/56

(54) **Fluid Level Sensor**

(30) Priority: 30.06.2011 US 201161503308 P; 20.06.2012 US 201213528430
(71) Applicant: TI Group Automotive Systems, L.L.C., Auburn Hills, MI 48326 (US)
(72) Inventor: Crary, Lynwood F., Preston, CT 06365 (US)
(74) Representative: von Kreisler Selting Werner

(57) **Abstract**

In at least some implementations, a fluid level sensor for sensing the level of a fluid within a tank includes a fluid tube through which fluid flows under pressure, a pressure pulse inducer, a fluid level responsive member and a pressure sensor. The pressure pulse inducer is disposed within the fluid tube so that at least some of the fluid flowing through the fluid tube engages the pressure pulse inducer. The fluid level responsive member is operably associated with the pressure pulse inducer to provide a force on the pressure pulse inducer that varies as a function of the fluid level in the tank. And the pressure sensor at senses the pressure of the fluid flowing through the tube, where the pressure pulse inducer induces changes in the pressure of the fluid as a function of the fluid level and the changes in pressure are sensed by the pressure sensor.

## Description

### Reference to Co-Pending Application

This application claims the benefit of, and incorporates by reference in its entirety, U.S. Provisional Application Serial No. 61/503,308 filed June 30, 2011.

### Technical Field

The present disclosure relates generally to sensing the level of fluid within a receptacle or tank from which the fluid is pumped.

### Background

Fluids may be stored in receptacles or tanks. Some fluid systems, like automotive vehicles, include a pump to deliver fluid under pressure from the tank, such as for use by an engine of the vehicle. It is known to sense or determine the level of fluid in a tank and to provide an indication of the level of fluid in the tank.

### Summary

In at least some implementations, a fluid level sensor for sensing the level of a fluid within a tank includes a fluid tube through which fluid flows under pressure, a pressure pulse inducer, a fluid level responsive member and a pressure sensor. The pressure pulse inducer is disposed within the fluid tube so that at least some of the fluid flowing through the fluid tube engages the pressure pulse inducer. The fluid level responsive member is operably associated with the pressure pulse inducer to provide a force on the pressure pulse inducer that varies as a function of the fluid level in the tank. And the pressure sensor at senses the pressure of the fluid flowing through the tube, where the pressure pulse inducer induces changes in the pressure of the fluid as a function of the fluid level and the changes in pressure are sensed by the pressure sensor.

A fluid tank and fluid level sensing system may include a fluid tank having an interior in which fluid is stored, a fluid pump that takes in fluid from the fluid tank and discharges that fluid under pressure from the fluid pump, and a fluid tube downstream of the fluid pump and through which fluid flows under pressure. A pressure pulse inducer is disposed within the fluid tube so that at least some of the fluid flowing through the fluid tube engages the pressure pulse inducer, and a fluid level responsive member is operably associated with the pressure pulse inducer to provide a force on the pressure pulse inducer that varies as a function of the fluid level in the tank. A pressure sensor senses the pressure of the fluid flowing through the tube, where the pressure pulse inducer induces changes in the pressure of the fluid as a function of the fluid level and the changes in pressure are sensed by the pressure sensor.

A method of determining the level of a fluid within a fluid tank includes pumping fluid from the fluid tank under pressure, routing the pumped fluid through a fluid tube, inducing pressure pulses within the fluid flowing through the fluid tube, and determining the frequency of the pressure pulses. The frequency of the pressure pulses is a function of the fluid level within the fluid tank, to enable a determination of the fluid level within a fuel tank at any desired time.

### Brief Description of the Drawings

The following detailed description of exemplary embodiments and best mode will be set forth with reference to the accompanying drawings, in which:

FIG. 1 is a diagrammatic view showing a fluid level sensor within a fluid tank; and

FIG. 2 is a diagrammatic view of a fluid tank and fluid level sensor.

### Detailed Description of Presently Preferred Embodiments

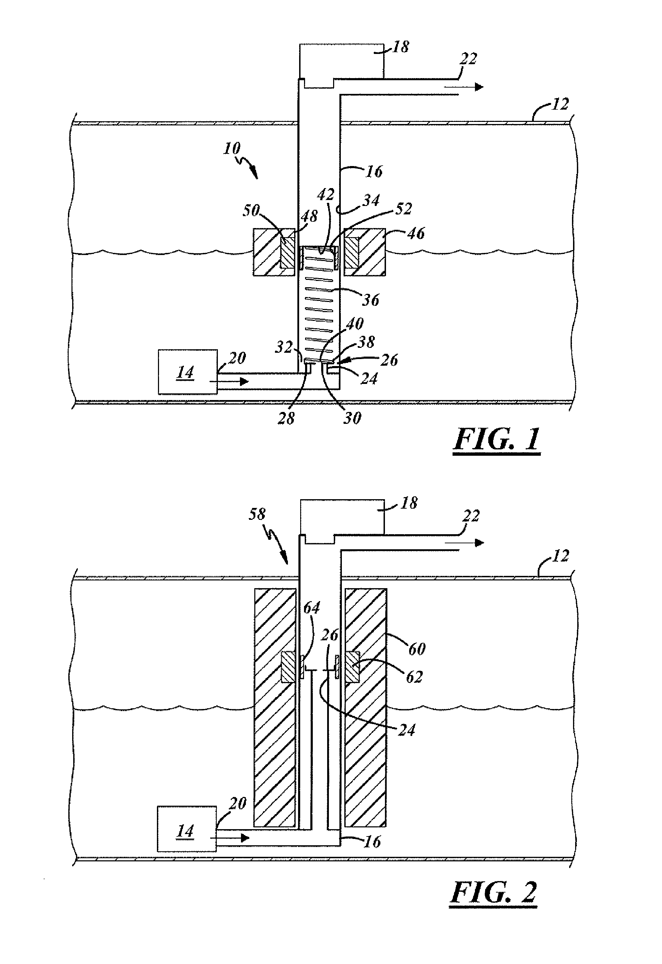

Referring in more detail to the drawings, FIG. 1 shows one implementation of a fluid level sensor 10. In this implementation, the fluid level sensor 10 is used to determine the level of fuel within a vehicle fuel tank 12. Of course, the fluid level sensor 10 may be used in other applications and for fluids other than fuel. As shown, the fuel tank 12 may be of conventional construction and may be formed from metal or plastic. A fluid pump 14 may be disposed in or near the tank 12 and it may have an outlet through which fuel is discharged under pressure for delivery to an engine. The outlet of the fluid pump 14 may be directed through a fluid tube 16 within the tank 12 and the pressure of the fluid flow may be detected, sensed or determined by a pressure sensor 18 as described herein.

The fluid tube 16 may have an inlet 20 and an outlet 22, and it may be a generally cylindrical and hollow tube formed of a metal (preferably nonmagnetic) or plastic material suitable for use in the fluid that is within the tank 12. In the implementation shown, the fluid tube 16 extends vertically with its inlet 20 disposed lower than its outlet 22, such that fluid flows against and opposite to the force of gravity. A stop surface or seat 24 may be located within the tube 16.

A pressure pulse inducer 26 may be located within the fluid tube 16 and may include a front surface 28 that faces the seat 24, and may engage the seat at least when fluid is not flowing through the fluid tube 16. The pressure pulse inducer 26 may move away from the seat 24 under the force of the fluid flowing through the fluid tube 16. One or more openings 30 may be formed through the front surface 28 of the pressure pulse inducer 26 so that at least some of the fluid may flow through the pressure pulse inducer 26 when fluid flows through the fluid tube 16. However, the front surface 28 could also be solid or imperforate such that all of the fluid flows around the pressure pulse inducer 26 and not through it. A gap 32 may be provided between the periphery of the pressure pulse inducer 26 and an inner surface 34 of the fluid tube 16, if desired, so that some of the fluid may readily flow around the pressure pulse inducer 26. The pressure pulse inducer 26 may be yieldably biased toward the seat by a biasing member, such as a spring 36. The pressure pulse inducer 26 may have a retention feature such as an upstanding lip or sidewall 38 to facilitate retaining the biasing member 36 against the pressure pulse inducer 26. The retention feature could also be a clip, tie, adhesive, etc.

The biasing member may be a coil spring received within the fluid tube 16. One end 40 of the spring 36 may engage and act on the pressure pulse inducer 26 and the other end may be spaced downstream from the pressure pulse inducer. The spring rate of the spring 36, in at least one implementation, is nonlinear, or not constant. In those implementations, changes in the length of the spring 36 (e.g. by extension or compression of the spring), changes the force the spring provides onto the pressure pulse inducer 26 in a nonlinear fashion.

A fluid responsive member 46 may be disposed in contact with the fluid in the tank 12, outside of the fluid tube 16. The fluid responsive member may be a float 46 that is buoyant in the fluid. The float 46 may be coupled to the fluid tube 16 so that the float remains adjacent to the fluid tube in use. In one implementation, the float 46 may have a passage 48 through which the fluid tube 16 extends such that the float surrounds all or part of the fluid tube. In this way, the float 46 moves up and down relative to the fluid tube 16 as the level of fluid in the tank 12 changes. The float 46 may carry a first magnet 50 so that the first magnet moves with the float.

The first magnet 50 may be received adjacent to the fluid tube 16 so that the fluid tube may be within the magnetic field of the first magnet. In at least one implementation, the first magnet 50 may be annular and may surround a portion of the fluid tube 16. Of course, the first magnet 50 could be provided in other shapes and forms, and more than one magnet may be used, as desired.

A second magnet 52 may be located within the fluid tube 16 and may be operably associated with a second end 42 of the spring 36. The second magnet 52 may be magnetically coupled to the first magnet 50, through the fluid tube 16. In this way, movement of the float 46 and first magnet 50 causes movement of the second magnet 52 and the second end of the spring 36 due to the magnetic coupling between the first and second magnets 50, 52. Accordingly, changes in the fluid level within the tank 12 may cause changes in the length of the spring 36 and thus, changes in the force the spring 36 provides onto the pressure pulse inducer 26.

When fluid is flowing through the fluid tube 16, the fluid flows around and/or through the pressure pulse inducer 26. The weight of the pressure pulse inducer 26 and the force of the spring 36 oppose the fluid flow in the fluid tube. The pressure pulse inducer 26 may be displaced away from the seat 24 by the fluid flow and then back toward the seat by the spring 36, the force of which increases when the pressure pulse inducer 26 is moved away from the seat 24. In this way, the pressure pulse inducer 26 may hunt or oscillate within the fluid tube 16 rather than reach an equilibrium and remain at rest. This movement of the pressure pulse inducer 26 may cause or induce pressure pulses or instantaneous changes in the pressure of the fluid flowing in the fluid tube 16. These pulses or pressure changes may be sensed by the pressure sensor 18 disposed downstream of the pressure pulse inducer 26. The pressure sensor 18 may be an existing fluid pressure sensor, such as may exist in at least certain vehicle applications, such as on or near a fuel rail in an automotive vehicle. The pressure sensor 18 may also be provided solely for use with the fluid level sensor 10, if desired.

As noted previously, when the level of fluid in the tank 12 changes, the float 46 and first magnet 50 move, and the second magnet 52 and second end 42 of the spring 36 also move which changes the force the spring 36 provides on the pressure pulse inducer 26. The stiffness of the spring that acts on the pressure pulse inducer 26 at any given time, in addition to the mass of the pressure pulse inducer (which is constant), determines the frequency at which the pressure pulse inducer will oscillate when acted upon by fluid flowing in the fluid tube 16. Accordingly, as the fluid level in the tank 12 changes and the stiffness of the spring acting on the pressure pulse inducer 26 changes, the frequency of oscillation of the pressure pulse inducer will change and hence, the frequency of pressure pulses within the fluid tube 16 will change. The frequency of the fluid pressure pulsations can be sensed by the pressure sensor 18 and correlated to a fluid level in the tank 12 to provide an indication of the fluid level in the tank at any desired time. The frequency of pressure pulses at any given fluid level may be calculated as a function of the known variables in the system (e.g. fluid pressure, pressure pulse inducer mass, spring rate), or it may be empirically determined, or both. The pressure sensor 18 may include or communicate with a microcontroller that provides a signal or other output indicative of the fluid level in the fluid tank 12 as a function of the pressure pulses sensed by the pressure sensor 18.

In another implementation of a fluid level sensor 58, as shown in FIG. 2, the fluid level responsive member may be a submersible member 60 (something that may be at least significantly submerged in the fluid within the tank) or other member that may be: 1) not significantly buoyant in the fluid within the tank 12, or 2) has a mass sufficient to operate the system and can be submerged (even if buoyant) such as by restricting its movement so that it is increasingly submerged in the fluid as the fluid level in the tank rises. The submersible member 60 may also surround or otherwise be located near the fluid tube 16. The submersible member 60 may move relative to the fluid tube 16. In some implementations, movement of the submersible member 60 relative to the fluid tube 16 may be minimal or constrained. In the embodiment shown in FIG. 2, the submersible member 60 is generally cylindrical and has a height that is nearly the same as the interior height of the tank 12. In this way, the submersible member 60 is not fully submerged until the fluid tank 12 is full or nearly so. And the submersible member 60 is still in fluid even when the fluid tank 12 is empty or nearly so.

The submersible member 60 may carry a first magnet 62 that provides a magnetic field onto and into the fluid tube 16. The first magnet 62 may be the same as the first magnet 50 of the fluid level sensor 10, including all of the alternate or optional forms discussed previously.

The pressure pulse inducer 26 may be formed similarly as the prior embodiment pressure pulse inducer and fluid flowing in the tube 16 may flow around and/or through the pressure pulse inducer. In this implementation, a second magnet 64 may be coupled to or carried by the pressure pulse inducer 26, without any biasing member 36 between the second magnet 64 and pressure pulse inducer 26. The second magnet 64 may be magnetically coupled to the first magnet 62 to thereby couple the submersible member 60 to the pressure pulse inducer 26. The pressure pulse inducer 26 could instead be a magnet such that a separate, second magnet 64 might not be needed. In this form, the pressure pulse inducer 26 would also be the second magnet 64 and be directly magnetically coupled to the first magnet 62.

As the fluid level in the fluid tank 12 changes, the amount of the submersible member 60 that is submerged in the fluid changes and the effective mass of the submersible member 60 changes. The mass of the submersible member 60 acts on the pressure pulse inducer 26 via the magnetic coupling of the first and second magnets 62, 64. Accordingly, the force on the pressure pulse inducer 26 that is provided by the fluid flowing in the fluid tube 16 is opposed by gravity on the submersible member 60 which provides a force on the pressure pulse inducer 26. As the pressure pulse inducer 26 is displaced away from the seat 24, the submersible member 60 is lifted and the effective mass of the submersible member 60 increases as less of the submersible member 60 is submerged, which causes the pressure pulse inducer 26 to move toward the seat 24, whereupon the effective mass of the submersible member 60 decreases as more of the submersible member 60 is again submerged. This may repeat continuously while the fluid is flowing within the fluid tube 16. The frequency of the movement or oscillation of the pressure pulse inducer 26 may vary as the level of fluid in the tank 12 varies. This may be determined by calculation or empirically, as desired, and it may be sensed by the pressure sensor 18 to provide an indication of the level of fluid within the fluid tank 12, as in the embodiment discussed with regard to FIG. 1. The magnetic coupling may provide a certain amount of flexibility in the system, acting like a spring. One example of this is that the magnetic field strength may vary if/as the position of one magnet relative to the other changes.

Accordingly, a fluid level sensor 10, 58 may use a pressure pulse inducer 26 that provides pressure pulses within a flow of fluid, which pressure pulses are at a frequency that varies as a function of the level of fluid in the tank 12. No resistance based sensor elements, which typically rely upon movement of a wiper along a resistive path that is difficult or expensive to protect from corrosion in at least certain fluids, like automotive fuels, is needed. In at least certain implementations, the pressure pulse inducer 26 does not require any electrical circuit within the tank 12, or any electrical components like a wiper/follower or a resistive path/trace in the tank. Also, the pressure pulse inducer may function independently of the flow rate of the liquid through the fluid tube.

While the forms of the invention herein disclosed constitute presently preferred embodiments, many others are possible. It is not intended herein to mention all the possible equivalent forms or ramifications of the invention. It is understood that the terms used herein are merely descriptive, rather than limiting, and that various changes may be made without departing from the spirit or scope of the invention.

## Claims

1. A fluid level sensor for sensing the level of a fluid within a tank, comprising:
a fluid tube through which fluid flows under pressure;
a pressure pulse inducer disposed within the fluid tube so that at least some of the fluid flowing through the fluid tube engages the pressure pulse inducer;
a fluid level responsive member operably associated with the pressure pulse inducer to provide a force on the pressure pulse inducer that varies as a function of the fluid level in the tank; and
a pressure sensor that senses the pressure of the fluid flowing through the tube, where the pressure pulse inducer induces changes in the pressure of the fluid as a function of the fluid level and the changes in pressure are sensed by the pressure sensor.

2. The fluid level sensor of claim 1 which also includes a biasing member that yieldably biases the pressure pulse inducer against the force of the fluid acting on the pressure pulse inducer, and wherein the fluid level responsive member acts on the biasing member to vary the force the biasing member provides on the pressure pulse inducer as a function of the level of fluid in the tank.

3. The fluid level sensor of claim 2 wherein the biasing member is a spring one end of which engages the pressure pulse inducer, the fluid level responsive member includes a float buoyant in the fluid, a first magnet is carried by the float for movement with the float, and a second magnet that is magnetically coupled to the first magnet is carried by the spring at its end opposite the pressure pulse inducer, and wherein as the fluid level changes the position of the float and the first magnet changes to also change the position of the second magnet to change the force the biasing member provides on the pressure pulse inducer as a function of the fluid level in the tank.

4. The fluid level sensor of claim 3 wherein the spring rate of the spring is not constant.

5. The fluid level sensor of claim 3 wherein the pressure pulse inducer includes at least one opening through which the fluid may flow.

6. The fluid level sensor of claim 1 wherein the fluid level responsive member is a submersible member acted on by the fluid within the tank, a first magnet is carried by the submersible member and a second magnet is carried by the pressure pulse inducer and is magnetically coupled to the first magnet through the fluid tube, and wherein the greater the portion of the submersible member that is submerged within the fluid the less effective mass acts on the pressure pulse inducer via the first and second magnets and hence, the pressure pulse inducer may be moved more easily by the fluid flowing through the fluid tube than when less of the submersible member is submerged in fluid which causes more effective mass to act on the pressure pulse inducer via the first and second magnets.

7. The fluid level sensor of claim 6 wherein movement of the submersible member relative to the fluid tube is constrained so that a portion of the submersible member is always submerged within the fluid in the tank.

8. A method of determining the level of a fluid within a fluid tank, comprising:
pumping fluid from the fluid tank under pressure;
routing the pumped fluid through a fluid tube;
inducing pressure pulses within the fluid flowing through the fluid tube; and
determining the frequency of the pressure pulses where the frequency of the pressure pulses is a function of the fluid level within the fluid tank.

9. The method of claim 8 wherein the pressure pulses are induced by directing the pumped fluid against a pressure pulse inducer disposed at least partially within the fluid tube.

10. The method of claim 9 wherein the pressure pulse inducer is movable within the fluid tube and movement of the pressure pulse inducer is restrained by a fluid level responsive member operably coupled to the pressure pulse inducer.
